# EUROPEAN PATENT APPLICATION

(11) **EP 4 390 381 A1**
(43) Date of publication of application: **26.06.2024**
(21) Application number: 23217360.9
(22) Date of filing: 15.12.2023
(51) Int. Cl.: G01N 21/90

(54) **CONTROL DEVICE FOR DETECTING THE PRESENCE OF FOREIGN OBJECTS INSIDE CONTAINERS AND RELATED METHOD**

(30) Priority: 21.12.2022 IT 202200026376
(71) Applicant: EMS GROUP S.P.A., 42027 Montecchio Emilia (RE) (IT)
(72) Inventor: DIFORTI, Alberto, Bibbiano (RE) (IT)
(74) Representative: Silva, Valentina

(57) **Abstract**

Control device (1) for detecting the presence of foreign objects inside open and empty containers (3), comprising a bottom (32) and a mouth (31) defining an opening of the container (3) towards the outside, said containers (3) being placed on a support surface (2), characterised in that said device (1) comprising at least one carriage (5) on which viewing means (4) are mounted, said carriage (5) being movable to perform at least one translation along a plurality of said containers (3) during which an image of the interior of each container (3) is detected.

## Description

### FIELD OF APPLICATION OF THE INVENTION

The present invention relates to the field of systems for checking empty containers before they are filled with the product to be contained. In particular, such a case relates to containers open towards the outside, in particular having a mouth defining an opening of the container towards the outside, e.g., bottles, preferably jars.

In particular, it relates to a control system to be performed before palletising the empty containers, i.e., storing them on a pallet.

### STATE OF THE ART

Control systems are known in the state of the art which check the integrity of the empty container before it is subjected to filling with the product to be contained.

Said systems generally use viewing means, such as cameras of various types, depending on the type of control to be performed.

In particular, said viewing means operate on the individual container, which is positioned at said viewing means so as to allow detection.

The known viewing systems are generally used to check that the container is intact.

They generally do not check the interior of the container and do not detect the possible presence of foreign objects which may have entered during the processing and handling steps prior to storage.

Said foreign objects can be broken pieces of the container itself or screws, bolts, or any portion or component of the machines which handle and/or process said containers, e.g., for their palletisation, i.e., for their storage in pallets.

Particularly in the case of containers having a particularly wide open mouth, the known palletising systems use gripping elements which fit inside said mouth to form the container layers for handling the container and positioning it in the layer.

As said gripping elements are inserted inside the container, they may lose some components which may become trapped in the container itself.

It is important that the pallets made with layers of empty containers having an open mouth, in particular if wide, as in jars, comprise safe containers, i.e., not contaminated by the possible presence of foreign objects entering through said mouth.

To prevent the presence of foreign objects inside the containers, systems are known which can rotate the container, adapted to bring its mouth downwards and allow any foreign objects to fall out.

However, this system is complex both in terms of equipment and work cycle, as it involves handling all the containers; this is to the detriment of the palletising speed.

Other control systems involve the use of viewing means operating on the individual container advancing on the conveyors prior to its arrangement in rows and layers for palletising. This causes the control to take place too early and does not take into account any contamination which may occur from the row and layer formation machines.

In fact, said control must be performed in the last steps of container palletising so that, after the control, no machine parts which can drop components can pass above the open mouth of the containers.

Systems are known which involve using a viewing element placed on the head of a palletiser.

Said viewing element is positioned above the entire layer of containers so that the check can be done just before the layer is deposited on the pallet.

In such a case, the reading takes place on the entire layer at the same time.

This system has the advantage of being a fast, unobtrusive control operation which does not heavily affect the working time of the palletising machine.

However, said system has the disadvantage that it is not accurate and does not ensure the correct detection of foreign objects in all containers.

In particular in the containers of the layer farthest from the viewing means, it is difficult to detect the presence of objects therein.

Furthermore, due to the various mechanical encumbrances on the head of a palletiser, said viewing means cannot be brought as close to the container mouths as would be necessary for reliable detection.

Additionally, if a foreign object is detected inside a container, it is difficult to detect it and pick it up.

In fact, the layers of jars or bottles on a pallet generally comprise hundreds of containers, and picking up the one containing a foreign object is not easy for the operator, especially with the highest layers on a pallet.

### EXPOSURE AND ADVANTAGES OF THE INVENTION

The technical problem at the basis of the present invention is that of providing a control device for detecting the presence of foreign objects inside containers, which is structurally and functionally designed to overcome one or more of the limits set out above with reference to the prior art.

In the context of the aforesaid problem, a main object of the invention is to develop a control device for detecting the presence of foreign objects inside containers which allows to have a reliable control.

It is further the object of the invention to make it easy to remove the contaminated container and replace it in the layer.

A further object of the invention is also that of making available to the art a control device for detecting the presence of foreign objects inside containers in the context of a simple, rational solution with a rather low cost.

In particular, said invention makes available to the art a control device for detecting the presence of foreign objects inside open, empty containers comprising a bottom and a mouth defining an opening of the container towards the outside.

Preferably said containers are placed on a support surface.

Preferably, said device comprises at least one carriage on which viewing means are mounted.

Preferably said carriage is movable to perform at least one movement along a plurality of said containers during which an image of the interior of each container is detected.

Advantageously, said control device provides for translating the viewing means above the mouths of said containers and detecting an image of the interior of each container by reading through the mouth.

Preferably, said control device comprises movement means operatively associated with said carriage for automatically translating the carriage at a speed suitable to allow the reading of the viewing means.

Optionally the carriage translates according to a straight direction to perform the detection of the viewing means on a plurality of containers arranged along a straight row.

Advantageously, the viewing means comprise at least one camera or a plurality of cameras preferably arranged side-by-side to preferably simultaneously read on parallel rows of containers.

Optionally the viewing means comprise a plurality of cameras which are preferably arranged at a pitch equal to the pitch of the rows of containers on the support surface.

Optionally, the control device comprises positioning means for varying the pitch of the cameras.

Preferably, said control device comprises a single carriage on which all the cameras are mounted, which translate simultaneously.

Optionally said control device comprises a carriage for each camera for independently translating each camera with respect to the corresponding row of containers.

Advantageously, said control device can comprise adjustment means for bringing the viewing means closer to or farther away from the mouth of the containers.

Preferably said control device comprises a frame supporting the carriage, the viewing means and preferably the movement means.

Preferably the frame is configured to position the viewing means above the support surface on which the containers are accumulated.

Preferably the support surface comprises advancement means for advancing the one or more rows of containers in a direction orthogonal to the rows and bringing new containers at the viewing means.

Optionally, the frame comprises at least one post configured to be supported by mechanical connection from the support surface or to be supported on the ground.

Advantageously, the frame can comprise wheels preferably associated with the post for translating the control device on the ground and positioning it at different support surfaces.

Preferably the support surface is a belt forming a layer of containers from which a palletiser picks up said layer and deposits it on a pallet.

The object of the invention is also the control method for detecting the presence of foreign objects inside open and empty containers comprising a bottom and a mouth defining an opening of the container towards the outside.

Preferably said method provides for positioning said containers on a support surface, preferably forming one or more rows of containers, and by means of viewing means, detecting an image of the interior of each container by translating said viewing means along the one or more rows of said containers.

Preferably, said control method provides for translating the viewing means above the mouths of said containers and detecting an image of the interior of each container by reading through the mouth.

Preferably, the method involves the viewing means being configured to simultaneously read on parallel rows of containers.

Preferably, said control method involves advancing the containers on the support surface, preferably in a direction orthogonal to the rows, to bring one or more rows of containers at the viewing means for detection.

Preferably, said control method involves detecting an image of the interior of each container during the formation of a layer of containers from which a palletiser picks up said layer and deposits it on a pallet.

A further object of the invention is a system comprising a control device made according to the above-described characteristics, for detecting the presence of foreign objects inside open and empty containers, and a support surface on which the bottom of said containers is supported.

These and other objects are reached by the characteristics of the invention as set forth in the independent claims. The dependent claims outline preferred and/or particularly advantageous aspects of the invention.

Said objects and advantages are all achieved by the control device for detecting the presence of foreign objects inside containers, which is the object of the present invention, and which is characterised by the following claims.

### BRIEF DESCRIPTION OF THE DRAWINGS

These and other features will be more apparent from the following description of certain embodiments illustrated by way of non-limiting example in the accompanying drawings.

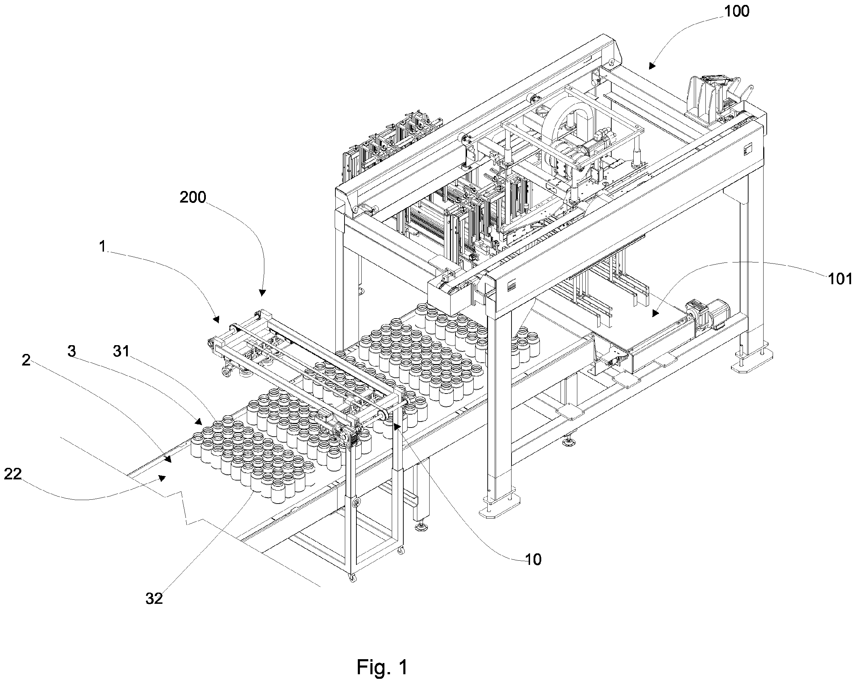

- Figure 1: illustrates an axonometric view of the control device combined with a layer forming machine;

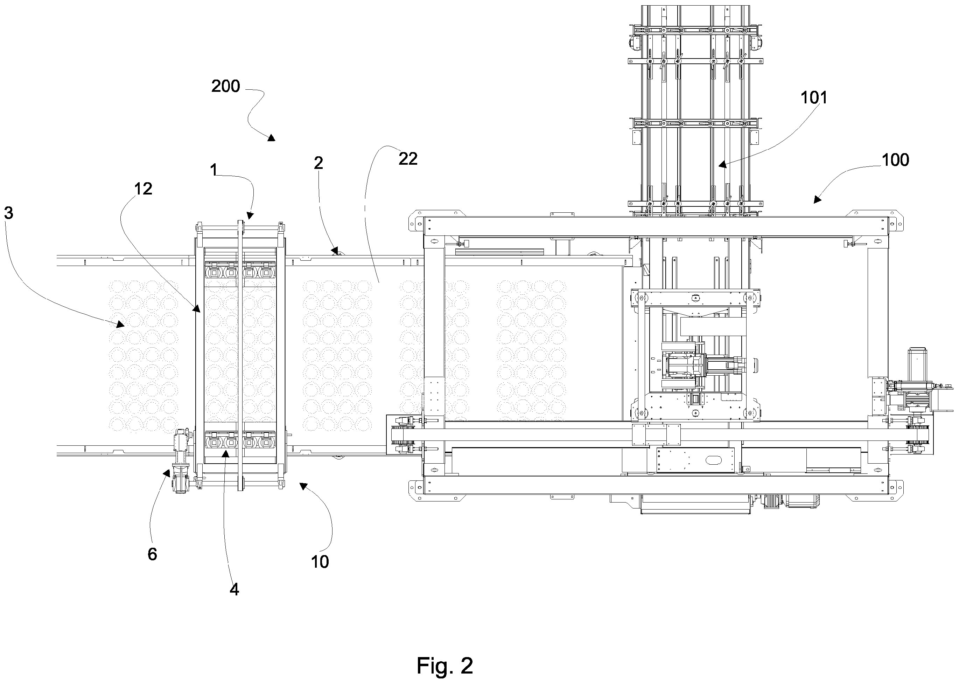

- Figure 2: illustrates a plan view of the control device combined with a layer forming machine;

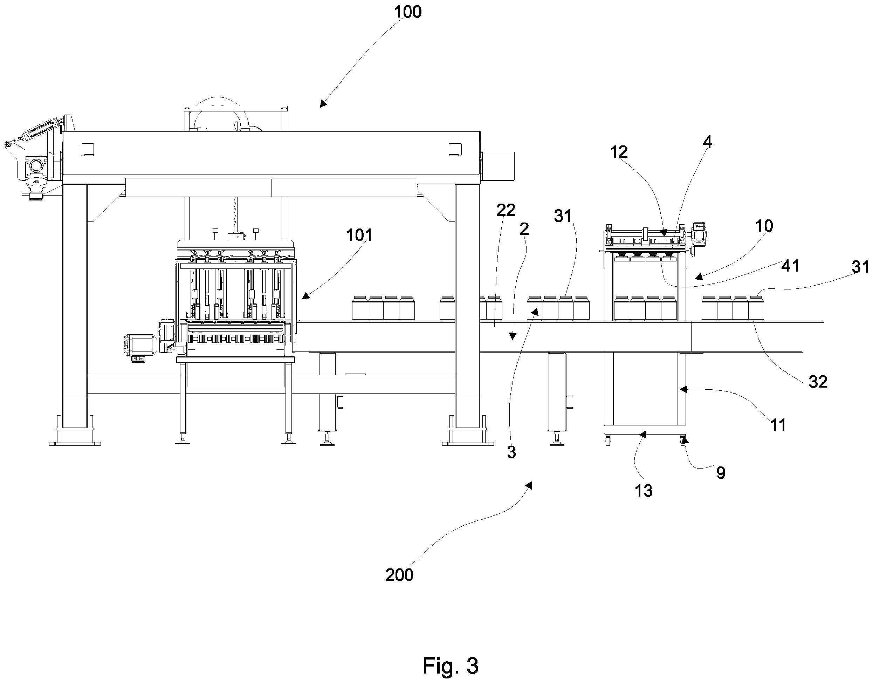

- Figure 3: illustrates a side view of the control device combined with a layer forming machine;
- Figure 4a, 4b: illustrates an axonometric view of the control device with the carriage in the end translation positions;

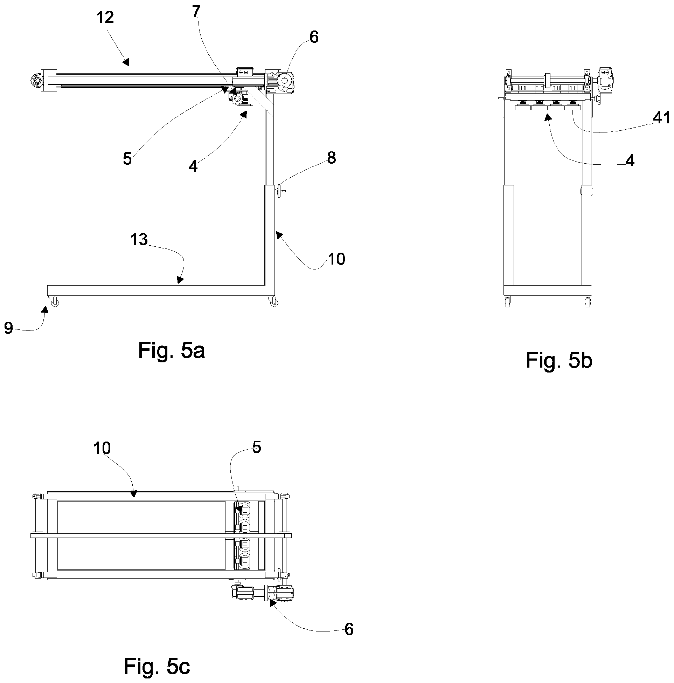

- Figure 5a, 5b, 5c: illustrates a side, front and d plan view of the control device.

### DESCRIPTION OF THE INVENTION

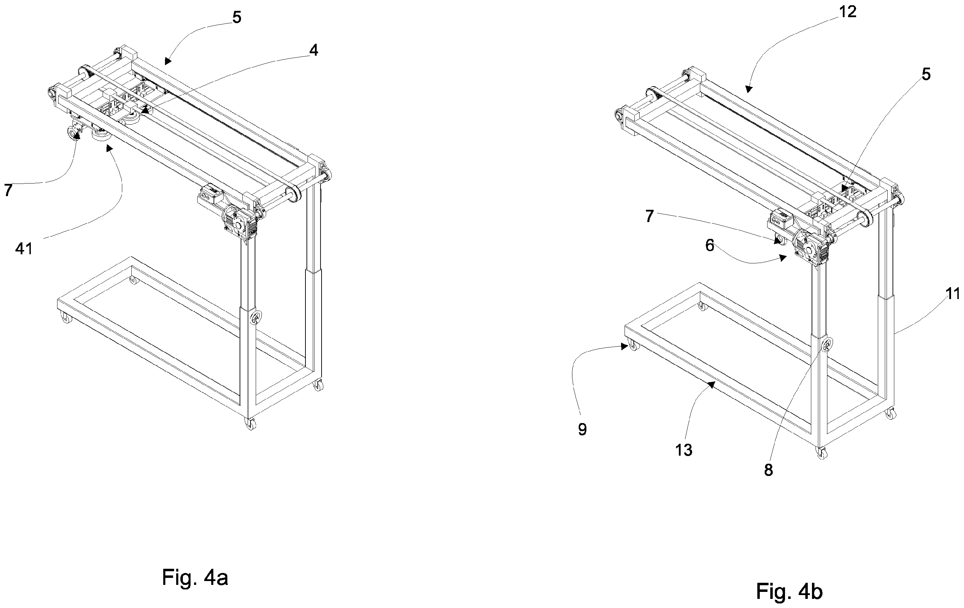

With particular reference to figure 4a, 4b, a control device 1 for detecting the presence of foreign objects inside open and empty containers 3 is depicted.

Said containers 3 comprise a bottom 32 and a mouth 31 defining an opening of the container 3 towards the outside.

In particular, said containers 3 are placed with the bottom 32 supported on a support surface 2, and the mouth facing upwards.

Said containers can be bottles, but especially jars, as they generally have wider mouths 31 and therefore it is easier for foreign objects to enter.

According to a preferred embodiment, the device 1 comprises viewing means 4 which are configured to detect the presence of foreign objects inside the container 3.

Said foreign objects may be pieces of the container itself, e.g., a shard of glass if the container is made of glass, or pieces from the machines which handle said containers 3 before filling with the final product.

Preferably said device 1 comprises at least one carriage 5 on which the viewing means 4 are mounted.

In particular, said carriage 5 is movable to perform at least one translation along a plurality of said containers 3 during which an image, also called a scan, of the interior of each container 3 is detected.

With this solution, the viewing means 4 move to the correct position to detect each container 3.

According to an aspect of the invention, the viewing means 4 translate above the mouths 31 of said containers 3 and detect an image of the interior of each container 3, in particular by reading through the mouth 31.

Preferably the detection or scanning of the interior of the container 3 is done by bringing the viewing means 4 close to the mouth 31 preferably by bringing them a few mm above said mouth 31.

An aspect of the invention envisages that the control device 1 comprises movement means 6 operatively associated with said carriage 5 for translating the carriage 5 automatically.

Such movement means 6 may comprise electric, pneumatic, etc. actuators, which allow the carriage 5 to be translated in at least one or more directions. We will not go into the details of the carriage 5 and its movement, as any means for transmitting motion or driving can be made according to the various options known to a person skilled in the art.

Preferably said movement means 6 can be managed so as to adjust the speed of the carriage 5 to allow the viewing means 4 to scan reliably.

A preferred embodiment depicted in the figure provides for the carriage 5 to translate in a straight direction to allow the viewing means 4 to scan on a plurality of containers 3 arranged along a straight line.

The figure depicts the carriage 5 and the viewing means 4 in the two end translation positions.

In such a case, an example is depicted in which the movement means 6 are an electric motor and the motion transmission means comprise belts and pulleys.

According to an aspect of the invention, said viewing means 4 may comprise a single camera 41 integral with the carriage 5 which, translating in a straight direction, scan said plurality of containers 3 arranged along a straight row.

Thereby, one row of containers 3 at a time is scanned during the movement of the carriage 5.

An alternative embodiment provides for the viewing means 4 to scan simultaneously on a plurality of parallel rows each containing a plurality of containers 3.

In particular, said viewing means 4 may comprise a plurality of cameras 41 for simultaneously reading on a plurality of parallel rows of containers 3.

Said cameras 41 are preferably arranged side-by-side as are the rows of containers 3 to be scanned.

An embodiment with four cameras 41 side-by-side is depicted in the figure.

Preferably, the cameras 41 are arranged at a pitch or distance from each other equal to the pitch of the rows of containers 3 on the support surface 2.

Thereby, when one camera 41 is positioned on a row, the others are also each positioned on a corresponding row.

A possible embodiment provides for the control device 1 to comprise a single carriage 5 on which all the cameras 41 are mounted.

This causes all the cameras 41 to translate simultaneously.

A possible alternative embodiment provides for the device to comprise a carriage 5 for each camera 41 to independently translate each camera with respect to the corresponding row of containers 3.

In such a case, dedicated movement means 6 will be associated with each carriage 5.

According to a preferred aspect, the device 1 may comprise positioning means 7 for varying the pitch of the cameras 41.

Said pitch variation can be performed by means of positioning means 7 operating manually, e.g., by means of a crank, as depicted in the figures, or automatically by means of automatic movement means such as a motor or piston, etc.

According to an aspect of the invention, the control device 1 may comprise adjustment means 8 for bringing the viewing means 4 closer to or farther away from the mouth 31 of the containers 3.

Therefore, depending on the height of the container 3, the correct distance between viewing means 4 and container 3 can be adjusted so as to achieve maximum scanning reliability.

This adjustment is particularly advantageous on machines which must process different formats of containers 3.

Said adjustment can be performed manually, e.g., by means of a crank, or automatically by means of automatic movement means such as a motor or piston, etc.

The device 1 may comprise a programmable control unit for managing said movement means 6, and/or said automatic positioning means 7, and/or said automatic adjustment means 8, or may manage them through a control unit of a machine 100 with which the device 1 is operatively associated.

Said device 1 can advantageously be combined with a layer forming machine 100, which will be described in more detail below.

Said device 1 can therefore cooperate with a forming machine 100, for example configured to form container layers.

A machine 100 of this type positions a plurality of containers 3, preferably arranged in straight rows, on the support surface 2.

In particular, the machine 100 can be configured to form a layer of containers 3 on the support surface 2 by means of a plurality of work cycles, in which each cycle performs the positioning for example of two rows at a time or four rows at a time of containers 3.

Preferably, the device 1 will also have a number of cameras 41 preferably equal to the number of rows which the machine 100 positions on the support surface 2 with each work cycle.

The pitch of the cameras 41 is preferably equal to the pitch with which the machine 100 introduces the rows of containers 3 on the support surface 2.

Said machine 100 can, for example, introduce rows by lifting them from a feed belt 101 and depositing them on the support surface 2.

Alternatively, said machine 100 can introduce the rows by pushing them from the feed belt 101 to the support surface 2 without lifting them.

Said layer forming machines 100 are known to the person skilled in the art and will not be described further in detail or in their many variations.

Said support surface 2 generally associated with the forming machine 100, may be mobile and comprise advancement means for advancing the one or more rows of containers 3 which the machine 100 positions.

Said advancement of the support surface 2 takes place in a direction orthogonal to the rows.

That is to say, the advancement of the support surface 2 is in the same direction in which the machine 100 transfers the rows from the feed belt 101 to the support surface 2.

The advancement of the support surface 2 allows new rows of containers 3 to be brought at the viewing means 4.

Said support surface 2 may be a belt 22 for forming a layer of containers 3 on which the forming machine 100 deposits the rows of containers 3 and from which a palletiser picks up said layer and deposits it on a pallet.

Therefore, once the machine 100 has deposited the rows of containers 3 on said belt 22, the containers 3 are controlled by the device 1. If the control does not detect the presence of foreign objects in the containers 3, the rows advance to form the complete layer at a position on the belt 22 in which the layer can be picked up by a palletising head.

Conversely, if the control detects the presence of foreign objects in the containers 3, the device 1 will provide an alarm for the operator and the advancement of the rows on the belt 22 will be stopped. Only after the operator has picked up and replaced container 3 containing the foreign object, can the next layer formation steps be carried out.

A possible embodiment can provide for the rows of containers 3 to be compacted against an abutment placed on the belt 22 in order to create a compact layer of containers 3 before performing the control with the device 1.

In such a case, the pitch of the cameras 41 can be the same as the pitch of the compacted rows of containers 3.

Optionally, the cameras 41 can also be arranged in a quincunx arrangement if their size would be such as to result in a larger footprint than the pitch between one row and another of containers 3.

A possible embodiment provides for the control device 1 to comprise a frame 10 supporting the carriage 5 and the viewing means 4.

Preferably said frame 10 may also support the movement means 6 and/or the positioning means 7 and/or the adjustment means 8.

As depicted in the figures, the frame 10 is configured to position the viewing means 4 above the support surface 2 on which the containers 3 are accumulated.

In particular, the frame 10 comprises a structure 12 on which the carriage 5 moves, which in a work step is positioned above the support surface 2.

Preferably, the frame 10 comprises at least one post 11.

Said post 11 can be supported by mechanical connection from the support surface 2 or as depicted in the figures it can be supported on the ground.

In particular if the frame 10 is directly supported on the ground, it may comprise wheels 9.

Preferably, the post 11 comprises a base 13 to which wheels 9 are associated for translating the control device 1 on the ground and positioning it at different support surfaces 2.

This facilitates and simplifies the use of the control device 1 on different machines 100.

As depicted in the figures, the adjustment means 8 can be made on the post 11.

In particular, the post 11 may provide an extension system which allows the insertion or extension of a tubular and/or a beam with respect to another fixed tubular and/or beam.

A further object of the invention is the control method for detecting the presence of foreign objects inside open and empty containers 3.

Said containers 3 comprising a bottom 32 and a mouth 31 defining an opening of the container 3 towards the outside.

In particular, said method provides for:
- positioning said containers 3 on a support surface 2,
- preferably forming one or more rows of containers 3,
- by means of viewing means 4, detecting an image of the interior of each container 3 by translating said viewing means 4 along one or more rows of said containers 3.

Preferably said method provides for translating the viewing means 4 above the mouths 31 of said containers 3 and detecting an image of the interior of each container 3, also called a scan, by reading through the mouth 31.

Preferably said method provides for reading simultaneously on parallel rows of 3 containers.

According to an aspect of the invention, the method provides for advancing the containers 3 on the support surface 2, in a direction orthogonal to the rows, to bring one or more rows of containers 3 at the viewing means 4 for detection.

According to a preferred embodiment, the method allows to detect an image of the interior of each container 3 during the formation of a layer of containers 3 from which a palletiser subsequently picks up said layer and deposits it on a pallet.

A further object of the invention is a system 200 comprising a control device 1 as described above, for detecting the presence of foreign objects inside open and empty containers 3, and a support surface 2 on which the bottom 32 of said containers is 3 supported.

It in any case is intended for that described above to be given by way of non-limiting example; therefore possible detail variants that may be required for technical and/or functional reasons are considered from now as to fall within the same protective scope defined by the claims below.

## Claims

1. Control device (1) for detecting the presence of foreign objects inside open and empty containers (3), comprising a bottom (32) and a mouth (31) defining an opening of the container (3) towards the outside, said containers (3) being placed on a support surface (2), **characterised in that** said device (1) comprising at least one carriage (5) on which viewing means (4) are mounted, said carriage (5) being movable to perform at least one translation along a plurality of said containers (3) during which an image of the interior of each container (3) is detected.

2. Control device (1) according to claim 1, which provides for translating the viewing means (4) above the mouths (31) of said containers (3) and detecting an image of the interior of each container (3) by reading through the mouth (31).

3. Control device (1) according to any one of the preceding claims, comprising movement means (6) operatively associated with said carriage (5) for automatically translating the carriage (5) at a speed suitable to allow the reading of the viewing means (4).

4. Control device (1) according to any one of the preceding claims, wherein the carriage (5) translates according to a straight direction to perform the detection of the viewing means (4) on a plurality of containers (3) arranged along a straight row.

5. Control device (1) according to any one of the preceding claims, wherein the viewing means (4) comprise at least one camera (41) or a plurality of cameras (41) preferably arranged side-by-side to preferably simultaneously read on parallel rows of containers (3).

6. Control device (1) according to any one of the preceding claims, wherein the viewing means (4) comprise a plurality of cameras (41) which are preferably arranged at a pitch equal to the pitch of the rows of containers (3) on the support surface (2).

7. Control device (1) according to any one of the preceding claims, comprising positioning means (7) for varying the pitch of the cameras (41).

8. Control device (1) according to any one of the preceding claims, comprising a single carriage (5) on which all the cameras (41) are mounted which translate simultaneously.

9. Control device (1) according to any one of the preceding claims, comprising a carriage (5) for each camera (41) for independently translating each camera (41) with respect to the corresponding row of containers (3).

10. Control device (1) according to any one of the preceding claims, wherein the support surface (2) comprises advancement means for advancing the one or more rows of containers (3) in a direction orthogonal to the rows and bringing new containers (3) at the viewing means (4).

11. Control method for detecting the presence of foreign objects inside open and empty containers (3) comprising a bottom (32) and a mouth (31) defining an opening of the container (3) towards the outside, said method provides for positioning said containers (3) on a support surface (2), preferably forming one or more rows of containers 3 and by means of viewing means (4), detecting an image of the interior of each container (3) by translating said viewing means (4) along the one or more rows of said containers (3).

12. Control method according to claim 11, which provides for translating the viewing means (4) above the mouths (31) of said containers (3) and detecting an image of the interior of each container (3) by reading through the mouth (31).

13. Control method according to any one of claims 11 to 12, wherein the viewing means (4) are configured to simultaneously read on parallel rows of containers (3).

14. Control method according to any one of claims 11 to 13, wherein the containers (3) are advanced on the support surface (2), in a direction orthogonal to the rows, to bring one or more rows of containers (3) at the viewing means (4) for detection.

15. Control method according to any one of claims 11 to 14, comprising detecting an image of the interior of each container (3) during the formation of a layer of containers (3) from which a palletiser picks up said layer and deposits it on a pallet.
